## Europäisches Patentamt
## European Patent Office
## Office européen des brevets

(19)

(11) Veröffentlichungsnummer: **0 005 230 B1**

(12) **EUROPÄISCHE PATENTSCHRIFT**

(45) Veröffentlichungstag der Patentschrift
20.05.81

(21) Anmeldenummer 79101231.3

(22) Anmeldetag 24.04.79

(51) Int. Cl.³: **C 08 G 18/79**, C 08 G 18/78, C 09 D 3/72, C 09 D 3/48

(54) **Bindemittel für pulverförmige Überzugsmittel.**

(30) Priorität 05.05.78 DE 2819827

(43) Veröffentlichungstag der Anmeldung
14.11.79 Patentblatt 79/23

(45) Bekanntmachung des Hinweises auf die Patenterteilung
20.05.81 Patentblatt 81/20

(84) Benannte Vertragsstaaten
BE CH DE FR GB IT NL SE

(56) Entgegenhaltungen
DE-A-1 571 136
FR-A-2 306 197

(73) Patentinhaber: BAYER AG, Zentralbereich Patente, Marken und Lizenzen, D-5090 Leverkusen 1, Bayerwerk (DE)

(72) Erfinder: de Cleur, Eckhard, Dr., Aubruchsgraben 14, D-4100 Duisburg 46 (DE)
Erfinder: Dhein, Rolf, Dr., Deswatinesstrasse 30, D-4150 Krefeld 1 (DE)
Erfinder: Rudolph, Hans, Dr., Haydnstrasse 9, D-4150 Krefeld 1 (DE)
Erfinder: Kreuder, Hans Joachim, Dr., Dörperhofstrasse 35, D-4150 Krefeld 1 (DE)
Erfinder: Müller, Hanns Peter, Dr., Berta-von-Suttner-Strasse 40, D-5090 Leverkusen 1 (DE)
Erfinder: Schäfer, Walter, Dr., Wolfskaul 6, D-5000 Köln 80 (DE)
Erfinder: Wagner, Kuno, Dr., Am Kiesberg 8, D-5090 Leverkusen 1 (DE)
Erfinder: Findeisen, Kurt, Dr., In Der Follmühle 10, D-5068 Odenthal (DE)

## Bindemittel für pulverförmige Überzugsmittel

Die vorliegende Erfindung betrifft pulverförmige Überzugsmittel, die als vernetzende Komponente ein Uretonimin bzw. Polyuretonimin enthalten.

Bindemittel für pulverförmige Überzugsmittel bestehen in der Regel im wesentlichen aus einem Oligomeren bzw. Polymeren mit funktionellen Gruppen als erster Komponente und einem Vernetzer, der mit den funktionellen Gruppen des Oligomeren bzw. Polymeren unter Einbrennbedingungen reagiert, als zweiter Komponente.

Pulverförmige Überzugsmittel, die blockierte Polyisocyanate als Vernetzer enthalten, sind seit langem bekannt (DE-AS 1 957 483, 2 064 C98, 2 215 080). Diese blockierten Polyisocyanate besitzen den Vorzug, bei Raumtemperatur und leicht erhöhter Temperatur mit den reaktionsfähigen Gruppen der ersten Komponente — wie erwünscht — nicht in Reaktion zu treten, unter Einbrennbedingungen aber das Blockierungsmittel rasch abzuspalten und dann durch Reaktion mit der ersten Komponente die ihnen zugedachte Vernetzerfunktion zu erfüllen.

Die Herstellung von blockierten Polyisocyanaten ist bekannt (vgl. z. B. Houben-Weyl, Methoden der organischen Chemie, Band XIV/2, 4. Auflage, Georg Thieme Verlag, Stuttgart 1963, Seiten 61 — 70). Von den zahlreichen in der Literatur beschriebenen Blockierungsmitteln für organische Polyisocyanate haben nur wenige technische Bedeutung erlangt. Für lösungsmittelhaltige Einbrennlacke ist die Verkappung mit Malonsäure- und Acetessigsäureestern gebräuchlich (z. B. BE-PS 756 058), während Pulverlackvernetzer nach den Ver·   :ren des Standes der Technik im allgemeinen mit Lactamen oder Phenolen blockiert werden (z. B. C   AS 1 957 483 und DD-PS 55 820).

Keine dieser Verbindungen erfüllt jedoch die an Verkappungsmittel gestellten Forderungen in idealer Weise. Bei Malon- und Acetessigestern ist zwar die Rückspalttemperatur niedrig (120—130°C/30 Minuten); aufgrund ihrer relativ hohen Molekulargewichte werden jedoch große Gewichtsmengen dieser Substanzen benötigt, oder — anders ausgedrückt — der Gewichtsanteil der verkappten NCO-Gruppen wird deutlich herabgesetzt. Außerdem ist die Vergilbungsresistenz beim Einbrennen bei solchen Systemen oft nicht gegeben. Der Einsatz von Phenolen als Blockierungsmittel ist aufgrund der physiologischen Eigenschaften und der Geruchsbelästigung dieser Verbindungen begrenzt, während bei Anwendung von ε-Caprolactam als Blockierungsmittel zur vollständigen Vernetzung hohe Einbrenntemperaturen (mindestens ca. 160°C/30 Minuten) angewandt werden müssen.

Eine Eigenart des elektrostatischen Pulversprühverfahrens ist es, daß an einigen Stellen (auf horizontalen Flächen, in Ecken und Winkeln) dickere Schichten als auf dem restlichen Substrat gebildet werden. Sobald die Schichtdicke aber einen Grenzwert — im allgemeinen 120—150 μm — überschreitet, stellen sich beim Einbrennen an diesen Stellen leicht Oberflächenstörungen ein. Man trifft deshalb häufig die Erscheinung an, daß ein im großen und ganzen ausgezeichnet beschichteter Gegenstand an einigen Stellen eine — meist durch Blasenbildung — verunstaltete Lackierung aufweist.

Es wurde nun gefunden, daß man äußerst hochwertige pulverförmige Überzugsmittel dann erhält, wenn man als Vernetzer Uretoningruppen-haltige Verbindungen mit einem Schmelzpunkt > 40°C einsetzt, die im wesentlichen frei von unter Einbrennbedingungen abspaltbaren flüchtigen Isocyanat-Blockierungsmitteln sind. Diese erfindungsgemäßen Überzugsmittel besitzen den Vorzug, auch in hohen Schichtdicken Lackierungen mit geradezu ideal einwandfreien Oberflächen und hoher Vergilbungsresistenz zu ergeben. Die Tatsache, daß während des Einbrennvorganges keine Blockierungsmittel frei werden, stellt einen unschätzbaren Vorteil dar: Die physiologische Reizung des Arbeitspersonals wird vermieden, auf Vorrichtungen zur Beseitigung von Geruchsbelästigungen kann verzichtet werden, und schließlich muß der Lackierer im wesentlichen nur für solche Komponenten bezahlen, die 100%ig in das vernetzende Lacksystem eingebaut werden.

Die vorliegende Erfindung hatte u. a. das Vorurteil zu überwinden, Uretonimine bzw. Polyuretonimine würden sich wegen vorzeitiger Reaktion nicht als Pulverlackvernetzer eignen.

Bisher hat man regelmäßig versucht, die Gefahr der vorzeitigen Reaktion pulverförmiger Überzugsmittel durch mehr oder weniger vollständige Blockierung der reaktionsfähigen Gruppen der vernetzenden Komponente zu verhindern. Wir dagegen blockieren ein Polyisocyanat, vorzugsweise ein Diisocyanat, mit einem Carbodiimid bzw. Polycarbodiimid, vorzugsweise ein Isocyanatgruppenhaltiges Carbodiimid bzw. Polycarbodiimid mit sich selbst unter Bildung von Uretoningruppen enthaltenden Produkten, wobei die Uretoningruppen selbst wieder als neue reaktive Gruppen mit der zu vernetzenden Komponente in Reaktion treten können.

Die erfindungsgemäßen Bindemittel erweisen sich im Hinblick auf die bekannte Reaktionsfreudigkeit der Uretonimine (J. Org. Chem. 33, 1913) als überraschend lagerstabil. So erleidet z. B. ein Hydroxylgruppen enthaltendes Bindemittel bei einer Lagerung von mehr als 8 Wochen bei 40°C und selbst bei der Compoundierung im Extruder keinerlei merkliche Vernetzung.

Gegenstand der Erfindung sind also Bindemittel für pulverförmige Überzugsmittel bestehend aus

(a) 25—95 Gew.-%, vorzugsweise 50—95 Gew.-%, mindestens eines Hydroxyl-, Carboxyl-, Mercapto-, Amino-, Amid-, Urethan-, Harnstoff- oder Thioharnstoffgruppen-haltigen Monomeren Oligomeren oder Polymeren mit einer Glasübergangstemperatur zwischen 40 und 200° C (gemessen mittels Differentialthermoanalyse) und

(b) 5—75 Gew.-%, vorzugsweise 5—50 Gew.-%, mindestens eines blockierten Polyisocyanats mit einem Schmelzpunkt zwischen 40° C und 220° C, vorzugsweise 60° C und 80° C, wobei sich die Prozentangaben von (a) und (b) jeweils auf 100 ergänzen, dadurch gekennzeichnet, daß der Vernetzer (b) mindestens eine Uretonimingruppe pro Molekül enthält.

Bevorzugte Vernetzer (b) enthalten

0,5 bis 35 Gew.-%, vorzugsweise 0,5 bis 26 Gew.-%, Uretonimingruppen,
0 bis 27 Gew.-% freie Isocyanatgruppen und
0 bis 30 Gew.-%, vorzugsweise bis 27 Gew.-%, Carbodiimidgruppen,

wobei sich diese Prozentangaben jeweils auf das Gewicht des Vernetzers (b) beziehen.

Uretonimine sind bekannt; sie sind durch 2+2-Cycloaddition von Isocyanaten an Carbodiimide zugänglich (DE-PS 1 012 601, DE-AS 1 568 501, DE-OS 2 504 400, 2 523 586, 2 537 685, 2 552 340, 2 552 350; Angew. Chem. 74, 801 [1962]; J. Organ. Chem. 33, 1913 [1968]; J. Elastoplastics 4, 259 [1972]).

Grundsätzlich können beliebige Isocyanate an Carbodiimide angelagert werden. Wünscht man jedoch den einfachen Fall einer Eintopfreaktion, so bietet sich die Blockierung Isocyanatgruppenhaltiger Carbodiimide mit sich selbst, d. h. mit den Carbodiimidgruppen des nächsten Moleküls, an. Diese meist vorgezogene Variante erfordert natürlich, daß die meist katalytisch verlaufende Carbodiimidisierungsreaktion der Polyisocyanate rechtzeitig abgebrochen wird, bevor alle freien Isocyanatgruppen abreagiert haben. Bei aromatischen Polyisocyanaten ist dies z. Zt. oft mit Schwierigkeiten verbunden, so daß sie sich zum alleinigen Einsatz zur Herstellung der erfindungsgemäß zu verwendenden Uretonimine wenig eignen.

Die Umsetzung von Isocyanaten zu Carbodiimiden ist bekannt (DE-OS 2 245 634, 2 504 400, 2 556 760, 2 624 198, US-PS 2 663 737, 2 663 738, 2 663 739, 2 853 473 und 2 941 966). Das Abbrechen der Reaktion — speziell bei nicht-aromatischen Isocyanaten — kann prinzipiell durch Abkühlen oder durch Umsetzung des Katalysators zu einem katalytisch nicht wirksamen Reaktionsprodukt erfolgen.

In manchen Fällen, besonders beim Arbeiten ohne Carbodiimidisierungskatalysatoren oder mit sehr reaktionsträgen Isocyanaten bzw. schwachen Katalysatoren, kann man der Gefahr, daß die Vernetzer beim Mischen der Pulverlackkomponenten im Extruder noch weiterkondensieren und Kohlendioxid abspalten, dadurch begegnen, daß man die Carbodiimidisierung bei einer Temperatur, die 20—40° C über der Massetemperatur des Extruders liegt, so lange ablaufen läßt, bis die Kohlendioxidabspaltung im wesentlichen beendet ist.

Die Uretonimine bilden sich aus den Isocyanatgruppen-haltigen Carbodiimiden oder auch Isocyanat/Carbodiimid-Gemischen meist spontan während des Abkühlens; Kupfersalze wirken auf diese Ringbildung katalytisch.

Die als Vernetzer (b) erfindungsgemäß einzusetzenden Uretonimine bzw. Polyuretonimine lassen sich also in der Regel derart herstellen, daß man organische Polyisocyanate, vorzugsweise Diisocyanate, gegebenenfalls in Gegenwart von 0,001—5 Gew.-%, bezogen auf Polyisocyanat, eines Carbodiimidisierungskatalysators bei einer Temperatur zwischen 80 und 220° C so lange reagieren läßt, bis 40 bis 90% der Isocyanatgruppen umgesetzt sind (nachprüfbar über die entwickelte Kohlendioxidmenge) und das Reaktionsprodukt durch Abkühlen, gegebenenfalls in Gegenwart von 0,05 bis 1 Gew.-%, bezogen auf freie Isocyanatgruppen, eines Ringbildungskatalysators in die entsprechenden Uretonimine bzw. Polyuretonimine überführt.

Als Ausgangsmaterialien zur Herstellung der erfindungsgemäß zu verwendenden Uretonimine können die an sich bekannten aliphatischen, cycloaliphatischen oder araliphatischen Diisocyanate der Polyurethanchemie dienen, z. B.

1,4-Tetramethylendiisocyanat, 1,5-Pentamethylendiisocyanat, 1,6-Hexamethylendiisocyanat, 2,2,4- und 2,4,4-Trimethyl-1,6-diisocyanatohexan, 1,11-Undecamethylendiisocyanat, 1,12-Dodecamethylendiisocyanat, 1,2-Diisocyanatomethylcyclobutan, 1,4-Diisocyanatocyclohexan,
Dicyclohexyldiisocyanat, Dicyclohexylmethan-4,4′-diisocyanat, p- und m-Xylylendiisocyanat, 1-Methyl-2,4′-diisocyanato-cyclohexan, 1-Methyl-2,6-diisocyanatocyclohexan, 3-Isocyanatomethyl-3,5,5-trimethyl-cyclohexylisocyanat (= Isophorondiisocyanat), $\alpha,\omega$-Diisocyanato-capronsäureester mit 1—8 C-Atomen im Alkoholrest.

Ganz besonders geeignet sind alicyclische Isocyanate, wie z. B. 1-Isocyanato-3,3,5-trimethyl-5-isocyanatomethyl-cyclohexan, Cyclohexan-1,4-diisocyanat, 4,4′-Diisocyanato-dicyclohexylmethan, 2,4- und 2,6-Diisocyanato-1-methylcyclohexan-Gemisch (Verhältnis 80 : 20). Gut geeignet sind auch Hexamethylendiisocyanat, 2,2,4- und 2,4,4-Trimethylhexamethylen-diisocyanat, Oxadiazintriongruppen und/oder Uretdiongruppen, Biuret- oder Isocyanuratgruppen enthaltende Diisocyanate auf Hexamethylendiisocyanat- und 1-Isocyanato-3,3,5-trimethyl-5-isocyanatomethyl-cyclohexan-Basis,

sowie auch Mischungen daraus.

Zur Herstellung der erfindungsgemäß zu verwendenden Uretonimine können auch Mischungen eingesetzt werden, die aus aliphatischen bzw. cycloaliphatischen Isocyanaten und bis zu 30 Mol-% aromatischen Diisocyanaten bestehen.

Bevorzugte aromatische Diisocyanate sind z. B.:

1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Diisocyanate, wie sie in der amerikanischen Patentschrift 3 492 330 beschrieben werden; Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden.

Es ist prinzipiell auch möglich, aliphatische Diisocyanate zu verwenden oder mitzuverwenden oder aromatische Diisocyanate mitzuverwenden, wie sie durch Umsetzung von überschüssigem Diisocyanat mit difunktionellen OH- oder NH-Gruppen tragenden Verbindungen entstehen und in der Praxis der Polyurethanchemie entweder als »modifizierte Isocyanate« oder als »Isocyanatpräpolymere« anzutreffen sind. Die Einbeziehung solcher abgewandelter Isocyanate ermöglicht, je nach Wahl der Kettenlänge oder der chemischen Natur der OH- und NH-Verbindungen, z. B. Glykol, Diglykol, Polyäther, Polycarbonate oder Polyester, die Herstellung weiterer Varianten der erfindungsgemäß zu verwendenden Uretonimine.

Zur Blockierung von Isocyanatgruppen, zur Beeinflussung des Schmelzpunktes bzw. des Molekulargewichts können in untergeordneten Mengen auch zerewitinoffaktive Verbindungen, die mit Isocyanatgruppen schneller reagieren als mit Carbodiimid- und Uretonimingruppen oder Monoisocyanate, vor, während oder nach der Carbodiimidisierung zugegeben werden. Bevorzugte zerewitinoffaktive Verbindungen sind z. B. Methanol, Äthanol, Cyclohexanol, Phenol, Mercaptan, Anilin, 1,2,4-Triazol, ε-Caprolactam, Pyrrolidon, Malonsäurediäthylester und Acetessigester. Als Monoisocyanate kommen z. B. Hexylisocyanat, Cyclohexylisocyanat, Phenylisocyanat, Tolylisocyanat usw. in Betracht. Zur Herstellung der erfindungsgemäß zu verwendenden Uretonimine werden z. B. die Diisocyanate, gegebenenfalls zusammen mit einer unterschüssigen Menge an zerewitinoffaktiven Verbindungen oder mit Monoisocyanaten (Verhältnis von zerewitinoffaktiven Verbindungen oder Monoisocyanaten zu Diisocyanaten < 1) in Gegenwart eines Carbodiimidisierungskatalysators auf Temperaturen von 80—250°C aufgeheizt, bis 40—90% der Isocyanatgruppen unter Kohlendioxidentwicklung zu Carbodiimidgruppen umgesetzt sind, worauf die Carbodiimidisierung durch Abkühlen auf Raumtemperatur abgebrochen wird.

Die bei der Carbodiimidisierung entstandene Menge Kohlendioxid, die sich leicht mit Hilfe einer Gasuhr messen läßt, ist dem theoretischen Carbodiimidgehalt äquivalent. Die Differenz zwischen ihm und dem Uretoningehalt ergibt den wirklichen Carbodiimidgehalt. Der Uretoningehalt der erfindungsgemäßen Produkte läßt sich aus der Differenz der Isocyanatgehalte, nämlich einmal bei Raumtemperatur und einmal bei 180°C bestimmt, errechnen.

Der Isocyanatgehalt wird wie üblich anhand des Verbrauchs von Di-n-butylamin bestimmt.

Bei der Herstellung der erfindungsgemäß zu verwendenden Polyisocyanatocarbodiimid-Additionsprodukte können als carbodiimidbildende Katalysatoren sämtliche üblicherweise zur Umwandlung von Isocyanat- in Carbodiimidgruppen verwendeten Katalysatoren eingesetzt werden. Beispiele hierfür sind Phosphor enthaltende Verbindungen wie Triphenylphosphinoxid, Phospholin- oder Phospholanoxide und deren Sulfide, Verbindungen, wie sie z. B. in den US-PS 2 663 737, 2 663 738, 2 663 739 und 2 853 473 beschrieben werden.

Als Carbodiimidisierungskatalysator wird ein Gemisch aus 1-Methyl-1-phospha-2-cyclopenten-1-oxid und 1-Methyl-1-phospha-3-cyclopenten-1-oxid, das im allgemeinen in Mengen von 0,1—5 Gew.-% zum Isocyanat zugegeben wird, bevorzugt. Die Reaktionstemperatur beträgt im allgemeinen 80—180°C.

Die Herstellung der erfindungsgemäß zu verwendenden Vernetzer wird bevorzugt in der Schmelze ausgeführt, kann aber auch in einem Lösungsmittel, wie z. B. Toluol, Xylol oder Decalin erfolgen, wobei das Lösungsmittel nach der Reaktion durch geeignete Verfahren wieder entfernt wird.

Ein Vorteil ist, daß man, ausgehend von ein und demselben Isocyanat, je nach den Erfordernissen den Schmelzpunkt, entsprechend dem Umfang der Carbodiimidisierung, in einem weiten Bereich variieren kann.

Die erfindungsgemäß zu verwendenden Uretonimine sind mahlbar bzw. pulverisierbar und lassen sich in dieser Form in Reaktionspartnern homogen verteilen. Ein großer Vorteil ist, daß die erfindungsgemäß zu verwendenden Polyisocyanatocarbodiimid-Additionsprodukte Reaktivpulver darstellen, die mit Reaktionspartnern definierte Vernetzungsreaktionen eingehen können und dabei keine der nur wenig Blockierungsmittel abspalten. Als Reaktionspartner (a) kommen Verbindungen in Frage, die funktionelle Gruppen tragen, welche sich mit Uretonimin-, Carbodiimid- und Isocyanatgruppe je nach Reaktionstemperatur umsetzen, z. B. Hydroxy-, Carboxyl-, Mercapto-, Amino-, Amid-, Urethan- und (Thio)Harnstoffgruppen. Als Polymere (a) können Polymerisate, Polykondensate und Polyadditionsverbindungen eingesetzt werden.

Bevorzugte Komponenten (a) sind in erster Linie Polyäther, Polythioäther, Polyacetale, Polyamide, Polyesteramide, Epoxidharze mit Hydroxylgruppen im Molekül, Phenol/Formaldehyd-Harze, Aminoplaste und ihre Modifizierungsprodukte mit polyfunktionellen Alkoholen, Anilin/Formaldehyd-Harze, Polyazomethine, Polyurethane, Polyharnstoffe und Polythioharnstoffe, Polysulfonamide, Melaminabkömmlinge, Celluloseester und -äther, teilweise verseifte Homo- und Copolymerisate von Vinylestern, teilweise acetlisierte Polyvinylalkohole, insbesondere aber Polyester und Acrylatharze.

Bei den in erster Linie zu verwendenden Hydroxylgruppen-haltigen Polymeren liegt die Hydroxylzahl in der Regel zwischen 20 und 400, vorzugsweise zwischen 30 und 140 mg KOH/g.

In der folgenden Aufzählung werden bevorzugte Komponenten (a) genannt:

Für die Herstellung von Polyestern (a) bevorzugte Carbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure bzw. — soweit zugänglich — deren Anhydride, dimere und trimere Fettsäuren wie Ölsäure, gegebenenfalls in Mischung mit monomeren Fettsäuren, Terephthalsäuredimethylester, Terephthalsäure-bis-glykolester, weiterhin cyclische Monocarbonsäuren wie Benzoesäure, tert.-Butylbenzoesäure oder Hexahydrobenzoesäure. Als mehrwertige Alkohole kommen z. B. Äthylenglykol, Propylenglykol-(1,2) und -(1,3), Butylenglykol-(1,4)- und -(2,3), Di-$\beta$-hydroxyäthylbutandiol, Hexandiol-(1,6), Octandiol-(1,8), Neopentylglykol, Cyclohexandiol, 1,4-Bis-(hydroxymethyl)-cyclohexan, 2,2-Bis-[4-hydroxy-cyclohexyl]-propan, 2,2-Bis-[4-($\beta$-hydroxyäthoxy)-phenyl]-propan, 2-Methyl-1,3-propandiol, Glycerin, Trimethylolpropan, Hexantriol-(1,2,6), Butantriol-(1,2,4), Tris-($\beta$-hydroxyäthyl)-isocyanurat, Trimethyloläthan, Pentaerythrit, Chinit, Mannit und Sorbit, Formose und deren Hydroxyalkylierungsprodukte, Methylglykosid, ferner Diäthylenglykol, Triäthylenglykol, Tetraäthylenglykol, Polyäthylenglykole, Dipropylenglykol, Tripropylenglykol, Polypropylenglykole, Dibutylenglykol, Polybutylenglykole und Xylylenglykol in Frage. Die Polyester können auch endständige Carboxylgruppen aufweisen. Auch Mono- und Polyester aus Lactonen, z. B. $\varepsilon$-Caprolacton oder Hydroxycarbonsäuren, wie z. B. Hydroxypivalinsäure, $\omega$-Hydroxydecansäure, $\omega$-Hydroxycapronsäure, Thioglykolsäure, können eingesetzt werden; Polyester aus den oben genannten Polycarbonsäuren bzw. deren Derivaten und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (»Ölalkyde«) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Äthylenglykol, Butandiol oder Hexandiol-1,6 und anderen Polyolen durch übliche Kondensationsreaktionen, z. B. mit Phosgen oder Diäthyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure, z. B. aus Dimethyldichlorsilan und polyfunktionellen Alkoholen oder Phenolen der oben genannten Art; Polyester der Phosphonsäuren, z. B. aus Methan-, Äthan-, $\beta$-Chloräthan-, Benzol- oder Styrolphosphonsäure, -phosphonsäurechlorid oder -phosphonsäureester und Polyalkoholen oder Polyphenolen der oben genannten Art; Polyester der phosphorigen Säure aus Phosphorigsäure, Phosphorigsäureestern, -esteramiden oder -esterchloriden und Polyalkoholen, Polyätheralkoholen und Polyphenolen; Polyester der Phosphorsäure, z. B. aus Polyestern der phosphorigen Säure durch Oxidation oder durch Umesterung von Phosphorsäureestern mit Polyalkoholen oder Polyphenolen; Polyester der Borsäure; Polysiloxane, wie z. B. die durch Hydrolyse von Dialkyldichlorsilanen mit Wasser und nachfolgende Behandlung mit Polyalkoholen oder die durch Anlagerung von Polysiloxandihydriden an Olefine, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-OS 2 410 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat; Alkylenoxide mit 4 bis 18 Kohlenstoffatomen, wie Butylenoxid, und Glycidyläther, wie Octylglycidyläther.

Als Dicarbonsäuren können bei diesem Verfahren sämtliche unter II im folgenden aufgeführte Polycarbonsäuren verwendet werden. Monocarbonsäuren, welche beispielsweise unter III aufgeführt sind, können ebenfalls eingesetzt werden.

Bevorzugte Komponenten (a) sind auch monomere Ester, z. B. Dicarbonsäure-bis-(hydroxyalkyl)-ester, Monocarbonsäureester von mehr als 2wertigen Polyolen und Oligoester mit Molekulargewichten zwischen 200 und 1000, vorzugsweise unter 600, die durch Kondensationsreaktionen aus in der Lackchemie üblichen Rohstoffen hergestellt werden können. Als solche sind z. B. anzusehen:

I. Alkohole mit 2—24, vorzugsweise 2—10 C-Atomen und 2—6 an nichtaromatische C-Atome gebundenen OH-Gruppen, z. B. Äthylenglykol, Propylenglykole, Diäthylenglykol, Dipropylenglykol, Butandiole, Neopentylglykol, Hexandiole, Hexantriole, Perhydrobisphenol, Dimethylolcyclohexan, Glycerin, Trimethyloläthan, Trimethylolpropan, Pentaerythrit, Dipentaerythrit, Mannit;

II. Di- und Polycarbonsäuren mit 4—36 C-Atomen und 2—4 Carboxylgruppen, sowie deren veresterungsfähige Derivate wie Anhydride und Ester, z. B. Phthalsäure(anhydrid), Isophthalsäure, Terephthalsäure, Hexahydroterephthalsäure, Hexahydroisophthalsäure, Alkyltetrahydrophthalsäuren, Endomethylentetrahydrophthalsäureanhydrid, Adipinsäure, Bernsteinsäure. Maleinsäure, Fumarsäure, Dimerfettsäuren, Trimellithsäure. Pyromellithsäure, Azelainsäure;

III. Monocarbonsäuren mit 6—24 C-Atomen. z. B. Caprylsäure, 2-Äthylhexansäure, Benzoesäure. p-tert.-Butylbenzoesäure, Hexahydrobenzoesäure, Monocarbonsäuregemische natürlicher Öle und Fette wie Cocosölfettsäure, Sojaölfettsäure, Ricinenfettsäure, hydrierte und isomerisierte Fettsäuren sowie deren Gemische, wobei die Fettsäuren auch als Glyceride einsetzbar sind und unter Umesterung und/oder Dehydratisierung umgesetzt werden können;

IV. einwertige Alkohole mit 1—18 C-Atomen. z. B. Methanol. Äthanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100—260° C, vorzugsweise 130—220° C, in der Schmelze oder in azeotroper Fahrweise gewonnen werden, wie es z. B. in Methoden der Organischen Chemie (Houben-Weyl). Bd. 14/2, 1—5, 21—23, 40—44, Georg Thieme Verlag, Stuttgart, 1963 oder bei C. R. Martens Alkyd Resins, 51—59, Reinhold Plastics Appl. Series, Reinhold Publishing Comp., New York, 1961 beschrieben ist.

Bevorzugte Polycarbonate sind solche, die z. B. durch Umsetzung von Diolen wie Propandiol-(1,3). Butandiol-(1,4) und/oder Hexandiol-(1,6), Diäthylenglykol, Triäthylenglykol, Tetraäthylenglykol mit Diarylcarbonaten, z. B. Diphenylcarbonat oder Phosgen, hergestellt werden können.

Bevorzugte Acrylatharze, welche als Komponente (a) verwendet werden können, sind Homo- oder Copolymerisate mit mindestens zwei Hydroxylgruppen pro Molekül, wobei z. B. folgende Monomere als Ausgangsprodukte gewählt werden können:

Ester der Acrylsäure und Methacrylsäure mit zweiwertigen, gesättigten aliphatischen Alkoholen mit 2—4 C-Atomen, wie z. B. 2-Hydroxyäthylacrylat, 2-Hydroxypropylacrylat, 4-Hydroxybutylacrylat und die entsprechenden Methacrylsäureester; Acrylsäure und Methacrylsäure; Acrylsäure- und Methacrylsäurealkylester mit 1—18, vorzugsweise 1—8 C-Atomen in der Alkoholkomponente, wie z. B. Methylacrylat, Äthylacrylat, Propylacrylat, Isopropylacrylat, n-Butylacrylat, tert.-Butylacrylat, 2-Äthylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

Besonders bevorzugte Acrylatharze sind Copolymere aus

a) 0 bis 50 Gew.-% Monoester der Acryl- oder Methacrylsäure mit zwei- oder mehrwertigen Alkoholen, wie Butandiol-(1,4)-monoacrylat, Hydroxypropyl(meth)acrylat, Diäthylenglykolmonoacrylat, Hydroxyäthyl(meth)acrylat; ferner Vinylglykol, Vinylthioäthanol, Allylalkohol, Butandiol-1,4-monovinyläther;

b) 5—95 Gew.-% Ester der Acrylsäure oder Methacrylsäure mit einwertigen Alkoholen, die 1 bis 12 Kohlenstoffatome enthalten, wie z. B. Methylmethacrylat, Äthylacrylat, n-Butylacrylat oder 2-Äthylhexylacrylat;

c) 0 bis 50 Gew.-% aromatische Vinyl- und Vinylidenverbindungen, wie Styrol, $\alpha$-Methylstyrol oder Vinyltoluol;

d) 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a) und/oder d) mindestens 5 Gew.-% beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat, oder Azodiisobutyronitril verwendet. Das Molekulargewicht kann z. B. mit Schwefelverbindungen, wie tert.-Dodecylmercaptan, geregelt werden.

Bevorzugte Polyäther (a) besitzen mindestens zwei, in der Regel zwei bis acht, vorzugsweise bis drei, Hydroxylgruppen und können z. B. durch Polyaddition von Epoxiden, wie Äthylenoxid, Propylenoxid, Butylenoxid, Trimethylenoxid, 3-Bis-(chlormethyl)-oxacyclobutan, Tetrahydrofuran, Styroloxid, dem Bis-(2,3-epoxypropyl)-äther des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Wasser, Ammoniak, Alkohole oder Amine, z. B. Wasser, Äthylenglykol, Propylenglykol-(1,3) oder -(1,2), Pentamethylenglykol, Hexandiol, Decamethylenglykol, Trimethylolpropan, 4,4'-Dihydroxydiphenylpropan, Anilin, Ammoniak, Äthanolamin, Äthylendiamin, Di-($\beta$-hydroxypropyl)-methylamin, Di-($\beta$-

hydroxyäthyl)-anilin, Hydrazin sowie aus hydroxyalkylierten Phenolen, wie z. B. O,O-Di-($\beta$-hydroxyäthyl)-resorcin, hergestellt werden.

Auch Sucrosepolyäther, wie sie z. B. in den DE-AS 1 176 358 und 1 064 938 beschrieben werden, kommen als Komponente (a) in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z. B. durch Polymerisation von Styrol, Acrylnitril in Gegenwart von Polyäthern entstehen (US-PS 3 383 351, 3 304 273, 3 523 093, 3 110 695, DE-PS 1 152 536), sind ebenfalls geeignet, ebenso OH-Gruppen aufweisende Polybutadiene.

Bevorzugte Komponenten (a) sind auch Polyacetale, z. B. die aus Glykolen, wie Diäthylenglykol, Triäthylenglykol, 4,4'-Dioxäthoxy-diphenyldimethylmethan, Hexandiol und Formaldehyd erhältlichen Verbindungen (auch durch Polymerisation cyclischer Acetale lassen sich geeignete Polyacetale herstellen), insbesondere auch Polyoxymethylene, z. B. Copolymerisate aus Formaldehyd oder Trioxan mit 1,3-Dioxolan, 1,3-Oxthiolan oder Äthylenoxid; natürlich vorkommende Polyacetale, wie Rohrzucker, Invertzucker, Stärke, Dextrin, Cellulose und ihre Alkylierungs-, Acylierungs-, Umesterungs- und Abbauprodukte; spirocyclische Polyacetale aus Pentaerythrit und Glyoxal.

Weitere bevorzugte Komponenten a) sind Phenol/Formaldehyd-Harze, z. B. solche, die nach den üblichen Methoden, besonders in Gegenwart von überschüssigem Formaldehyd, aus Phenol, tert.-Butylphenol, Kresolen, Xylenolen, Resorcin oder Diphenylolalkanen durch saure oder alkalische Kondensation erhältlich sind, und ihre Cyanäthylierungs- und Hydrierungsprodukte.

Ebenso können hydroxylgruppenhaltige Polyurethane und/oder Polyharnstoffe mit Durchschnittsmolekulargewichten von 400 bis 15 000 eingesetzt werden.

Weitere bevorzugte Komponenten (a) sind Thiodiglykol sowie die Kondensationsprodukte von Thiodiglykol mit sich selbst und/oder mit anderen Glykolen, Dicarbonsäuren, Formaldehyd, Aminocarbonsäuren oder Aminoalkoholen (je nach den Co-Komponenten handelt es sich bei den Produkten um Polythiomischäther, Polythioätherester, Polythioätheresteramide).

Weitere bevorzugte Komponenten (a) sind Polymercaptale, insbesondere solche aus Formaldehyd und 1,4-Tetramethylendimercaptan oder 1,6-Hexamethylendimercaptan.

Bevorzugte Aminogruppen enthaltende Verbindungen (a) sind: Polyamine wie Hexamethylendiamin, Melamin, Melamin/Formaldehyd-Kondensate, $\alpha,\omega$-Diaminocapronsäureester mit niederen ($C_1 - C_{17}$) Fettalkoholen, die Toluylendiamine, gegebenenfalls substituierte Diphenylmethandiamine, deren Homologe, Hydrierungsprodukte der aromatischen Di- und Polyamine, Aminocapronsäure, Polyamidpolyamine, die z. B. aus Adipinsäure und Hexamethylendiamin erhalten werden, N,N'-Dibenzylhydrazin, Carbodihydrazid, Adipinsäuredihydrazid, außerdem auch endständige Aminogruppen enthaltende Polyimide, wie z. B. Poly-dibenzimidazole und Polyimide aus Pyromellithsäureanhydrid und Diaminen sowie die bekannten Modifizierungsprodukte von Polyphosphornitrilchloriden mit Polyaminen.

Bevorzugte Komponenten (a) sind z. B. auch Polyamine, z. B. Polyäthylenimine, ihre Cyanäthylierungs- und Hydroxyalkylierungsprodukte, insbesondere Umsetzungsprodukte von Polyalkylenpolyaminen mit Epichlorhydrin, ferner die Hydrierungsprodukte von cyanäthylierten hochmolekularen Polyaminen und Polyalkoholen, Anilin/Formaldehyd-Harze, sowie Polyätheralkoholen oder Polyester.

Weiterhin ist es möglich, Polyesteramide und Polyamide als Reaktionspartner a) für die Uretonimine einzusetzen, z. B. die aus mehrwertigen gesättigten und ungesättigten Carbonsäuren bzw. deren Anhydriden und aus Hydroxycarbonsäuren und mehrwertigen gesättigten und ungesättigten Aminoalkoholen, Diaminen, Polyaminen und ihren Mischungen gewonnenen, vorwiegend linearen Kondensate, also Umsetzungsprodukte aus Diaminen, wie Diaminodiphenylmethan und -propan, m-Xylylendiamin, Äthylendiamin, Tetramethylendiamin oder Hexamethylendiamin und Polycarbonsäuren der oben (bei Polyestern) genannten Art, dimeren Fettsäuren sowie Mineralsäuren vom Typ der Phosphorsäure, phosphorigen Säure und der Phosphonsäuren; Polypeptide aus natürlichen oder synthetischen Aminosäuren wie Glycin, Alanin, 4-Aminobuttersäure, 6-Aminocapronsäure oder 17-Amino-heptadecansäure; Polyamide aus Lactamen, insbesondere aus 6-Caprolactam, 1,2-Dodecanlactam und 2-Pyrrolidon, ferner natürlich vorkommende Polypeptide und ihre Abbauprodukte, z. B. Gelatine oder Kasein; ferner auch Polyesteramide aus den genannten Polycarbonsäuren, Polyalkoholen und Polyaminen oder aus Polycarbonsäuren und Aminoalkoholen wie Äthanolamin, 4-Aminobutanol-1, 6-Aminohexanol-1, Diäthanolamin oder Aminophenolen.

Weitere bevorzugte Komponenten (a) sind die als Polyhydrazide bekannten Kondensationsprodukte aus Dicarbonsäuren und Hydrazin, die Methylenpolyamide aus Dinitrilen und Formaldehyd sowie die Polysulfonamide, z. B. aus n-Hexan-1,6-bis-sulfonsäurechlorid oder m-Benzol-bis-sulfonsäurechlorid und 1,6-Hexamethylendiamin.

Weitere bevorzugte Komponenten a) sind Aminoplastharze, z. B. auf Basis von Harnstoff, Thioharnstoff, Melamin, Dicyandiamid, Hexamethylendiharnstoff, Äthylenharnstoff, Acetylenharnstoff oder m-Benzoldisulfonamid, und ihre Modifizierungsprodukte mit Polyolen.

Weitere bevorzugte Komponenten a) sind Polyharnstoffe, z. B. aus Hexamethylendiamin oder Bis-($\gamma$-aminopropyl)-äther durch Kondensation mit Kohlendioxid, Harnstoff oder Diphenylcarbonat, aus 1,10-Decamethylendiamin durch Kondensation mit 1,6-Hexamethylen-bisäthylurethan oder durch Polyaddition von Diaminen, wie 4,4'-Diaminodiphenylmethan, 4,4'-Diaminodiphenyl, 1,8-Octamethylendiamin, 2,6-diaminotoluol-4-sulfonsaures Natrium, an Polyisocyanate, wie 1,6-Hexamethylendiisocyanat, 2,4-Toluylendiisocyanat oder 4,4'-Diisocyanatodiphenylmethan; Polythioharnstoffe, z. B. aus Hexamethylendiamin oder p-Xylylendiamin durch Kondensation mit Schwefelkohlenstoff oder Trithiokohlensäureestern oder durch Polyaddition von Diaminen an Disenföle, z. B. Hexamethylendisenföl.

Als Komponente (a) in Frage kommen ferner Polyurethane, z. B. aus niedermolekularen Mono- oder Polyalkoholen, wie Äthylenglykol, Propylenglykol, Butandiol, Hexandiol, Diäthylenglykol, Triäthylenglykol, Thiodiglykol, N,N-Di-($\beta$-hydroxyäthyl)-anilin oder -m-toluidin, N-Methyldiäthanolamin, Hydrochinon-di-($\beta$-hydroxyäthyl)-äther, Adipinsäure-di-($\beta$-hydroxyäthyl)-ester, N,N,N',N'-Tetra-(2-hydroxypropyl)-äthylendiamin, Glycerin, Trimethylolpropan, Mannit oder Glukose, durch Polyaddition an Polyisocyanate, wie Hexamethylendiisocyanat, Tetramethylendiisocyanat, Toluylendiisocyanat, p-Phenylendiisocyanat, 4,4'-Diisocyanatodiphenylmethan, 1,5-Naphthylendiisocyanat, 4,4',4''-Triphenylmethantriisocyanat oder 4,4',4''-Triisocyanato-triphenylthiophosphat; aus hochmolekularen Polyhydroxylverbindungen, wie Hydroxyl- und gegebenenfalls auch Carboxylgruppen enthaltenden gesättigten oder ungesättigten Polyestern, Polyäthern, Polyacetalen, Polythioäthern oder Polyesteramiden der obengenannten Art, durch Polyaddition an Polyisocyanate oder Polyisocyanatabspalter in Gegenwart üblicher niedermolekularer Kettenverlängerungsmittel, wie Wasser, Glykole, Hydrazine, Hydrazide, Diamine und Aminoalkohole oder aus Bis-chlorameisensäureestern, wie Äthylenglykol-bis-chlorameisensäureester oder Butandiol-1,4-bis-chlorameisensäureester, durch Kondensation mit Di- oder Polyaminen, wie Äthylendiamin, Hexamethylendiamin, Bis-(3-  ropropyl)-äther, Piperazin, 1,4-Diaminocyclohexan, Bis-(4-amino-3-methylphenyl)-methan, p-Phen     diamin oder Diäthylentriamin.

Weiterhin sind solche Polymerisate zu nennen, in denen durch eine nachträgliche Behandlung, z. B. durch eine Pfropfreaktion oder durch Hydrolyseverfahren gegenüber Isocyanaten funktionelle Gruppen erzeugt werden. Hierzu gehören unter anderem Polyvinylalkohol, anverseiftes Polyvinylacetat, anverseiftes Polyvinylacetat-Polyäthylen-Mischpolymerisat, anverseifte Polyacrylester, anverseifte Polyvinylidencarbonate, Hydrierungsprodukte von Äthylen-Kohlenoxid-Mischpolymerisaten, Pfropfpolymerisate von Vinylverbindungen wie Vinylchlorid, Vinylacetat oder Acrylnitril, auf lineare oder verzweigte Polyäther, Polyacetale oder auf Polymere der obengenannten Art, die gegenüber Isocyanaten funktionelle Gruppen enthalten.

Als Komponente a) können selbstverständlich Gemische mehrerer Stoffe eingesetzt werden.

Es ist auch möglich, geringe Mengen flüssiger Komponenten a) mitzuverwenden, wenn weitere Komponenten a) der Mischung mit einem entsprechend hohen Erweichungspunkt dazu beitragen, daß die resultierende Mischung in Kombination mit den Polyisocyanatocarbodiimid-Additionsprodukten b) zu pulverförmigen Bindemitteln verarbeitet werden kann.

Die aufgezählten Komponenten a) sind als Bindemittelgrundlage selbstverständlich nur geeignet, sofern sie pro Molekül mindestens zwei mit der Isocyanat- bzw. Uretonimingruppe reaktive Gruppen besitzen.

Die Kombination der erfindungsgemäßen Polyisocyanatocarbodiimid-Additionsprodukte b)    : Verbindungen a), insbesondere mit Polyhydroxylverbindungen, lassen sich bei Einwirkung von Hitze für Überzüge für Metalle, Holz, Gewebe, Kunststoffe, als Schmelzkleber oder mit Füllstoffen wie gepulverten Metallen z. B. Aluminium, Bronze, Kupfer, Eisen, Zink, als Metallotersatzmittel verwenden. Es lassen sich selbstverständlich auch andere Füllstoffe untermischen, wie Plastikpulver, z. B. Polyäthylen, Polypropylen, Polyacrylnitril-Polybutadien-Polystyrol, Natur- und synthetische Kautschuke; Altgummi; Minerale, z. B. Bimsstein, Aluminiumoxid, Granat, Quarz, Feldspat oder andere Schleifmaterialien; Silikate, z. B. Diatomeenerde, Aluminiumsilikatton, Glimmer, Asbest; Metalloxide, z. B. Eisenoxid, Zinkoxid, Titanoxid, Magnesiumoxid, Ferrite, z. B. Zinkferrit; und Metallsulfide, z. B Eisensulfid, Zinksulfid, Bleisulfid; und verschiedene feste Füllstoffe, wie Graphit, Kohlerußpigmente, Glasfasern und Metallfasern.

Zu den Hilfsmitteln in den erfindungsgemäßen pulverförmigen Bindemitteln zählen Pigmente und Füllstoffe sowie Substanzen zur Verbesserung des Verlaufs und zur Vermeidung von Oberflächenstörungen, wie z. B. Silikonöle, p-Toluolsulfonsäureamid, flüssige Acrylatharze und Weichmacher sowie Katalysatoren.

Geeignete Katalysatoren sind z. B. Zinnverbindungen wie Di-n-butyl-zinnoxid, Di-n-butylzinndialkylester oder Titansäureester, insbesondere Tetraisopropyltitanat.

Die Erweichungspunkte der erfindungsgemäßen Bindemittel liegen im allgemeinen so, daß sie sich bei Temperaturen zwischen 80 und 120°C mit den zur Herstellung der erfindungsgemäßen Überzugsmittel notwendigen Zusätzen verarbeiten lassen. Die Erweichungspunkte der Mischungen liegen andererseits so, daß die erfindungsgemäßen Bindemittel zu nichtklumpenden, freifließenden Pulvern mit einer Teilchengröße von etwa 20 bis etwa 120 $\mu$ vermahlen werden können. Praktisch bedeutet dies, daß die zur Anwendung gelangenden Polymeren Erweichungspunkte zwischen etwa 40 und etwa 200°C besitzen.

Die pulverförmigen Überzugsmittel können in geeigneten Mischaggregaten, z. B in Rührkesseln oder Mischschnecken (Extrudern), hergestellt werden und zu Pulvern verarbeitet werden, die in üblicher Weise, insbesondere nach dem elektrostatischen Pulverspritzverfahren (EPS-Verfahren) auf Unterlagen aufgetragen werden.

Die Lackfilme härten durch Erhitzen auf Temperaturen oberhalb 130°C, vorzugsweise zwischen etwa 150 und 220°C, rasch zu harten und glatten Überzügen aus.

Die nachstehend angeführten Teile bedeuten, sofern nicht anders angegeben, Gewichtsteile; Prozentangaben bedeuten Gewichtsprozente.

## Beispiele

### A₁) Herstellung von Vernetzern

Die Schmelzpunkte der Substanzen der Beispiele 1—14 wurden in einer Kapillare in einem Schmelzpunktbestimmungsapparat nach Dr. Tottoli bestimmt.

### Beispiel 1

444 g 1-Isocyanatomethyl-5-isocyanato-1,3,3-trimethyl-cyclohexan und 0,4 ml eines Gemischs aus 1-Methyl-1-phospha-2-cyclopenten-1-oxid und 1-Methyl-1-phospha-3-cyclopenten-1-oxid werden in 336 g Xylol gelöst und unter Stickstoff so lange auf Rückflußtemperatur geheizt, bis innerhalb von 2 Stunden 28 Liter Kohlendioxid entstanden sind. Anschließend wird die Lösung bei ca. 50°C/0,07 Torr am Rotationsverdampfer vom Lösungsmittel befreit. Man erhält ein hochviskoses Harz, das beim Stehen hart und pulverisierbar wird.

Smp.: 121 – 130°C
Uretonimin: 17%
Isocyanat 9%
Carbodiimid <3%

### Beispiel 2

222 g 1-Isocyanatomethyl-5-isocyanato-1,3,3-trimethyl-cyclohexan und 0,2 ml eines Gemisches aus 1-Methyl-1-phospha-2-cyclopenten-1-oxid und 1-Methyl-1-phospha-3-cyclopenten-1-oxid werden unter Stickstoff so lange auf 160°C geheizt (ca. 3,5 Stunden), bis 20 Liter Kohlendioxid entstanden sind. Das flüssige Produkt wird auf ein Blech gegossen, wo es bei einer Temperatur <80°C zu einer leicht pulverisierten Masse erstarrt.

Smp.: 140 – 150°C
Uretonimin: 6%
Isocyanat: 4%
Carbodiimid: <15%

### Beispiel 3

222 g 1-Isocyanatomethyl-5-isocyanato-1,3,3-trimethyl-cyclohexan und 0,4 ml eines Gemisches aus 1-Methyl-1-phospha-2-cyclopenten-1-oxid und 1-Methyl-1-phospha-3-cyclopenten-1-oxid werden unter Stickstoff so lange auf 160°C geheizt, bis innerhalb von 2 Stunden 16 Liter Kohlendioxid entstanden sind. Das flüssige Produkt wird auf ein Blech gegossen, wo es bei einer Temperatur <50°C zu einer leicht pulverisierbaren Masse erstarrt.

Smp.: 84 – 87°C
Uretonimin: 8%
Isocyanat: 10%
Carbodiimid: <10%

### Beispiel 4

666 g 1-Isocyanatomethyl-5-isocyanato-1,3,3-trimethyl-cyclohexan werden mit 283 g eines Polyesters mit 1,5 Gew.-% Hydroxylgruppen, hergestellt aus Neopentylglykol, Trimethylolpropan, Hexandiol und Terephthalsäure, bei einer Temperatur von 160°C umgesetzt. Nach Zusetzen von 1,2 ml eines Gemisches aus 1-Methyl-1-phospha-2-cyclopenten-1-oxid und 1-Methyl-1-phospha-3-cyclopenten-1-oxid wird das Produkt so lange auf 160 C aufgeheizt (ca. 2,5 Stunden), bis 35 Liter Kohlendioxid entstanden sind. Das Produkt erstarrt beim Erkalten bei einer Temperatur von ~ 35 C zu einer leicht pulverisierbaren Masse, die in Methylenchlorid löslich ist. Das Produkt wird bei weiterem Aufheizen unlöslich.

Smp.: 98 – 105° C
Uretonimin: 14%
Isocyanat: 6%
Carbodiimid: <1%

## Beispiel 5

111 g 1-Isocyanatomethyl-5-isocyanato-1,3,3-trimethyl-cyclohexan und 42 g 4,4'-Diisocyanatodiphenylmethan werden unter Stickstoff in Gegenwart von 0,2 ml eines Gemisches aus 1-Methyl-1-phospha-2-cyclopenten-1-oxid und 1-Methyl-1-phospha-3-cyclopenten-1-oxid bei 160 C carbodiimidisiert, bis innerhalb von ca. einer Stunde 10 Liter Kohlendioxid entstanden sind. Das Produkt erstarrt bei einer Temperatur <120°C.

Smp.: 175 – 185° C
Uretonimin: 13%
Isocyanat: 9%
Carbodiimid: <6%

## Beispiel 6

111 g 1-Isocyanatomethyl-5-isocyanato-1,3,3-trimethyl-cyclohexan und 15 g eines Gemisches aus 2,4-Toluylendiisocyanat und 2,6-Toluylendiisocyanat (Verhältnis 80 : 20) werden unter Stickstoff in Gegenwart von 0,2 ml eines Gemisches aus 1-Methyl-1-phospha-2-cyclopenten-1-oxid und 1-Methyl-1-phospha-3-cyclopenten-1-oxid auf 160°C aufgeheizt, bis innerhalb von ca. 1 Stunde 11 Liter Kohlendioxid entstanden sind. Auf ein Blech gegossen, erstarrt das Produkt bei einer Temperatur <100°C.

Smp.: 170 – 180° C
Uretonimin: 11%
Isocyanat: 4%
Carbodiimid: <12%

## Beispiel 7

70 g 1-Isocyanatomethyl-5-isocyanato-1,3,3-trimethyl-cyclohexan werden in Gegenwart von 0,84 ml eines Gemisches aus 1-Methyl-1-phospha-2-cyclopenten-1-oxid und 1-Methyl-1-phospha-3-cyclopenten-1-oxid auf 160°C aufgeheizt, bis innerhalb von ca. 1/2 Stunde 3 Liter Kohlendioxid entstanden sind. Dann werden bei 120°C 14,35 g 1,2,4-Triazol zugegeben und die Reaktionsmischung noch 10 Minuten bei dieser Temperatur gehalten. Das Produkt wird auf ein Blech gegossen, wo es bei einer Temperatur <60°C erstarrt.

Smp.: 80 – 90° C
Uretonimin: 8%
Isocyanat: 5%
Carbodiimid: <3%

## Beispiel 8

168 g Hexamethylendiisocyanat werden mit 0,4 ml eines Gemischs aus 1-Methyl-1-phospha-2-cyclopenten-1-oxid und 1-Methyl-1-phospha-3-cyclopenten-1-oxid versetzt. Das Gemisch wird so lange auf 180°C erhitzt, bis innerhalb von 40 Minuten 12 Liter Kohlendioxid entstanden sind, und dann auf ein Blech gegossen, wo es zu einer mahlbaren Masse erstarrt.

Smp.: 172 – 176° C
Uretonimin: 25%
Isocyanat: 15%
Carbodiimid: <2%

## Beispiel 9

560 g 1-Isocyanatomethyl-5-isocyanato-1,3,3-trimethyl-cyclohexan werden bei 50 C mit 53,2 g Methanol umgesetzt. Anschließend werden 6,7 g eines Gemischs aus 1-Methyl-1-phospha-2-cyclopenten-1-oxid und 1-Methyl-1-phospha-3-cyclopenten-1-oxid zugegeben, und das Ganze wird langsam auf 140°C aufgeheizt. Nachdem innerhalb von 5 Stunden 34 Liter Kohlendioxid entstanden sind, kühlt man das Produkt auf Raumtemperatur ab, wobei es bei einer Temperatur $<50°$ C zu einer leicht pulverisierbaren Masse erstarrt.

Smp.: 70–75°C
Uretonimin: 4%
Isocyanat: 1%
Carbodiimid: <9%

## Beispiel 10

560 g 1-Isocyanatomethyl-5-isocyanato-1,3,3-trimethyl-cyclohexan werden bei 50 C mit 36 g Methanol umgesetzt. Nach Zugabe von 6,7 g eines Gemischs aus 1-Methyl-1-phospha-2-cyclopenten-1-oxid und 1-Methyl-1-phospha-3-cyclopenten-1-oxid wird das Ganze langsam auf 160 C aufgeheizt. Nachdem innerhalb von 2,5 Stunden 39 Liter Kohlendioxid entstanden sind, wird das Produkt auf ein Blech gegossen, wo es bei einer Temperatur $<50°$ C zu einer leicht pulverisierbaren Masse erstarrt.

Smp.: 82–90°C
Uretonimin: 6%
Isocyanat: 2%
Carbodiimid: <10%

## Beispiel 11

70 g 1-Isocyanatomethyl-5-isocyanato-1,3,3-trimethyl-cyclohexan und 14,35 g 1,2,4-Triazol werden in 250 ml Xylol gelöst. Zu dem Gemisch werden 0,84 g eines Gemischs aus 1-Methyl-1-phospha-2-cyclopenten-1-oxid und 1-Methyl-1-phospha-3-cyclopenten-1-oxid gegeben, und die Lösung wird auf Rückflußtemperatur gebracht. Nach 10 Stunden sind 4 Liter Kohlendioxid entstanden. Die Mischung wird am Rotationsverdampfer bei einem Druck von 0,1 Torr eingeengt. Man erhält ein leicht pulverisierbares Produkt.

Smp.: 64–72°C
Uretonimin: 6%
Isocyanat: 2%
Carbodiimid: <6%

## Beispiel 12

420 g 1-Isocyanatomethyl-5-isocyanato-1,3,3-trimethyl-cyclohexan werden mit 201 g Malonsäurediäthylester, katalysiert durch 0,2 g Natriumphenolat, umgesetzt. Zu dem Reaktionsgemisch werden 5 g eines Gemischs aus 1-Methyl-1-phospha-2-cyclopenten-1-oxid und 1-Methyl-1-phospha-3-cyclopen-ten-1-oxid gegeben. Dann wird auf 160°C aufgeheizt. Nachdem das Reaktionsprodukt innerhalb von 2 Stunden viskos geworden ist und 24 Liter Kohlendioxid entstanden sind, wird es auf ein Blech gegossen, wo es bei einer Temperatur $<50°$ C zu einer leicht pulverisierbaren Masse erstarrt.

Smp.: 130–140°C
Uretonimin: 3%
Isocyanat: 2%
Carbodiimid: <6%

## Beispiel 13

50 g des Produktes aus Beispiel 8 wird zusammen mit 222 g 1-Isocyanatomethyl-5-isocyanato-1,3,3-trimethyl-cyclohexan in Gegenwart von 0,4 ml eines Gemischs aus 1-Methyl-1-phospha-2-cyclopenten-1-oxid und 1-Methyl-1-phospha-3-cyclopenten-1-oxid auf 160°C geheizt, bis innerhalb von 3 Stunden 16 Liter Kohlendioxid entstanden sind. Das Produkt wird auf ein Blech gegossen, w · es bei einer Temperatur < 110° C erstarrt.

Smp.: 150 – 155° C
Uretonimin: 13%
Isocyanat: 7%
Carbodiimid: < 8%

## Beispiel 14

53 g Hexamethylendiisocyanat und 14,35 g 1,2,4-Triazol werden in 250 ml Xylol gelöst. Zu dem Gemisch werden 0,84 g eines Gemischs aus 1-Methyl-1-phospha-2-cyclopenten-1-oxid und 1-Methyl-1-phospha-3-cyclopenten-1-oxid gegeben, und die Lösung wird auf Rückflußtemperatur gebracht. Nach 2 Stunden, nachdem 2,5 Liter Kohlendioxid entstanden sind, wird die Mischung am Rotationsverdampfer bei einem Druck von 0,1 Torr eingeengt. Man erhält ein pulverisierbares Produkt.

Smp.: 130 – 140° C
Uretonimin: 13%
Isocyanat: 8%
Carbodiimid: < 1%

## Beispiel 15

### $B_1$) Herstellung eines Pulverlackes

Es werden die notwendigen Komponenten — 85 g eines verzweigten Terephthalat-Polyesters aus Terephthalsäure, Neopentylglykol, Hexandiol und Trimethylolpropan (1,5% OH) und 15 g Vernetzer aus Beispiel 1 — zusammen mit 40 g Titandioxid als Pigment in feinteiliger Form vorgemischt. Als Verlaufshilfsmittel (1 – 2%, bezogen auf Bindemittel) wird ein handelsübliches Copolymeres von Butylacrylat und 2-Äthylhexylacrylat verwandt. Eingearbeitet wird das Verlaufsmittel in Form eines sogenannten Masterbatches, d. h. es werden 100 Teile des Polyesters mit 10 Teilen des Verlaufsmittels verschmolzen und nach dem Erstarren zerkleinert.

Die Homogenisierung des Gemischs erfolgt auf einer handelsüblichen 2welligen, selbstreinigenden Extruder-Einrichtung. Die Manteltemperatur wird so gewählt, daß die Austrittstemperatur der Schmelze bei ca. 125 C liegt. Der Schmelzkuchen kann einerseits sich selbst überlassen werden oder kann andererseits, wie in der Praxis üblich, über eine kontinuierlich arbeitende Quetsch- und Kühleinrichtung schnell abgekühlt werden. Nach dem Erkalten auf Temperaturen von 20 – 30 C wird erst grob vorgemahlen und anschließend eine Feinmahlung unter Gebläsekühlung durchgeführt. Das anfallende feinteilige Pulver wird anschließend durch Windsichten oder durch mechanisches Sieben von gröberen Anteilen oberhalb einer Teilchengröße von ca. 0,09 mm befreit.

### $C_1$) Applikation des gemäß $B_1$) erhaltenen Pulverlackes

Unter Verwendung des gemäß $B_1$) hergestellten Pulverlackes werden 0,5 mm dicke mit Zinkphosphatierung vorbehandelte Stahlbleche mit einer elektrostatischen Pulversprühanlage beschichtet, und die Prüflinge werden anschließend während 15 Minuten auf 200 C erhitzt. Es entstehen so Filme einer Filmdicke von ca. 0,060 mm.

Elastizitätsprüfungen:

1. Prüfung der Elastizität durch Erichsentiefung nach DIN 53 156: 10 mm,
2. Gitterschnitt nach DIN 53 151 — Gerät Gt C: O ( = fehlerfrei, optimal),
3. Bleistifthärte nach DIN 46 450: 3 H,
4. Glanz nach Gardner 60 : 79%,
5. Verlauf gut: leichte Struktur.

Die Prüfung mit dem Wasser ergibt einen zähelastischen Span und bestätigt die vorzügliche Haftung im Gitterschnitt-Prüfverfahren.

Die Lösungsmittelfestigkeit läßt auf eine gute chemische Vernetzung schließen. Die Lacke sind gegen Toluol, Äthylglykolacetat und Aceton bei mehreren Minuten Einwirkzeit bis zum ersten Erweichen der Oberfläche beständig. Ein Auflösen der Beschichtung erfolgt nicht.

## A₂) Herstellung von Vernetzern

Die Erweichungspunkte der Substanzen der Beispiele 16 – 24 wurden mittels Differentialthermoanalyse bestimmt.

### Beispiel 16

In einem mit Stickstoff gespültem Reaktionsgefäß werden unter Rühren 111 g (0,5 Mol) Isophorondiisocyanat und 0,06 g 1-Methylphospholinoxid*) unter Rühren auf 160°C erwärmt. Innerhalb von ca. 2 Stunden werden 5,6 l (50% der Theorie) Kohlendioxid abgespalten, dann der Kolbeninhalt auf 120°C abgekühlt und abgefüllt. Innerhalb von einigen Stunden wird das Produkt fest.

Es zeigt in der Differentialthermoanalyse zwei endotherme Effekte: eine bei 70 – 75°C beobachtete Wärmeaufnahme dürfte dem Erweichen der Probe zuzuordnen sein, während einer starken Wärmeaufnahme mit einem Maximum bei etwa 145°C die Rückbildung von Isocyanatgruppen zugeordnet werden kann.

Man erhitzt eine abgewogene Menge des Produktes zwecks Bestimmung des Isocyanatgehaltes einige Minuten in Chlorbenzol, erhält eine klare Lösung, die nach dem Abkühlen auf Raumtemperatur mit Di-n-butylamin versetzt wird, um die Isocyanatgruppen titrimetrisch zu erfassen. Der NCO-Gehalt beträgt 13%.

Führt man die obige CO₂-Abspaltung statt bei 160°C bei 200°C durch, so kann die Reaktion bereits nach ca. 10 Minuten durch Abkühlen auf 120°C beendet werden.

### Beispiel 17

2886 g Isophorondiisocyanat (13 Mol), 14 g 1-Methylphospholinoxid*) und 21,6 g p-Toluolsulfonsäureamid werden unter Rühren auf 160°C erwärmt. Innerhalb von ca. 6 Stunden werden 192,2 l Kohlendioxid (66% der Theorie) abgespalten, das Reaktionsgemisch anschließend auf 115°C abgekühlt und mit einem NCO-Gehalt von ca. 16,0% abgefüllt. Nach dem Abkühlen auf Raumtemperatur wird ein festes Produkt erhalten, daß nach der Differentialthermoanalyse bei 77°C erweicht. Stellt man von diesem Produkt bei 130°C eine 65%ige Lösung in Äthylglykolacetat her und künlt anschließend auf 20°C ab, so mißt man Viskositäten entsprechend folgenden Auslaufzeiten (DIN-4-Becher; DIN 53 211):

| Nach Stunden | Auslaufzeit |
|---|---|
| 0 | 45 sec |
| 1 | 49 |
| 2,5 | 50 |
| 23 | 100 |
| 71 | 489 |
| 170 | geliert |

Nach 170 Stunden liegt eine gummiartig erstarrte Mischung vor, die in der Kälte auch in Chlorbenzol nicht löslich ist. Erwärmt man die Mischung mit Chlorbenzol einige Zeit auf 110°C, so erhält man eine klare Lösung mit einem titrierten NCO-Gehalt von 14% (bezogen auf den eingesetzten Feststoff).

### Beispiel 18

111 g Isophorondiisocyanat (0,5 Mol) und 0,06 g 1-Methylphospholinoxid werden unter Rühren auf 160°C erwärmt. Innerhalb von ca. 4 Stunden werden 7,4 l (66% der Theorie) CO₂ abgespalten, das Reaktionsgemisch auf 120°C gekühlt und mit 3,3 g Zinndioctoat versetzt, anschließend abgefüllt. Der nach dem Abkühlen erhaltene Feststoff hat einen NCO-Gehalt von 14%.

---

*) Unter 1-Methylphospholinoxid ist nachfolgend jeweils ein Gemisch aus 1-Methyl-1-phospha-2-cyclopenten-1-oxid und 1-Methyl-1-phospha-3-cyclopenten-1-oxid zu verstehen.

### Beispiel 19

111 g (0,5 Mol) Isophorondiisocyanat werden auf 80° C erwärmt. Unt   Rühren werden 15,5 g (0,25 Mol) Äthylenglykol zugetropft und das Gemisch ca. 5 Stunden bei 30 – 90° C gerührt, bis ein NCO-Gehalt von 17% erreicht ist. Dann werden 0,24 g 1-Methylphospholinoxid zugegeben und unter Erwärmen auf 160 – 180° C 3,7 l (66% der Theorie) Kohlendioxid abgespalten. Nach dem Abkühlen wird ein spröder Feststoff mit 4,3% NCO und einem Erweichungspunkt von ca. 99 C (DTA) erhalten.

Führt man die Abspaltung von 3,7 l $CO_2$ aus dem Isophorondiisocyanat in Gegenwart von 0,06 g 1-Methylphospholinoxid als ersten Schritt bei 160° C durch, kühlt dann auf 100° C ab und setzt dann mit 15,5 g Äthylenglykol um, wobei die Temperatur wieder auf 120 – 130° C angehoben wird, so resultiert nach dem Abkühlen ein Feststoff mit 6,5% NCO und einem Erweichungspunkt von 100° C (DTA).

### Beispiel 20

Aus dem Gemisch von 131 g (0,5 Mol) 4,4'-Diisocyanatodicyclohexylmethan, 0,39 g 1-Methyl-phospholinoxid und 0,98 p-Toluolsulfonsäureamid werden bei 160° C in etwa 6 Stunden 7,4 l (66% der Theorie) Kohlendioxid abgespalten, dann das Gemisch abgefüllt. Nach dem Abkühlen wird ein Feststoff mit ca. 10% NCO und einem Erweichungspunkt von ca. 52° C (DTA) erhalten.

### Beispiel 21

Eine Mischung von 88,2 g (0,4 Mol) Isophorondiisocyanat, 17,4 g (0,1 Mol) eines Toluylen-2,4/2,6-diisocyanat-Isomerengemisches (Verhältnis 65 : 35) und 0,05 g 1-Methylphospholinoxid werden unter Abspaltung von 7,4 l $CO_2$ (66% der Theorie) ca. 3 Stunden bei 160° C gerührt. Das nach dem Abkühlen erhaltene Festharz erweicht bei 65° C (DTA) und enthält 16% NCO.

### Beispiel 22

168 g (1 Mol) Hexamethylendiisocyanat und 0,34 g 1-Methylphospholinoxid werden ca. 3 Stunden bei 160 C gerührt, bis 9 l (40% der Theorie) $CO_2$ abgespalten sind. Das Produkt ist nach dem Abkühlen zunächst dünnflüssig, erstarrt einige Zeit später aber gummiartig und besitzt einen NCO-Gehalt von ca. 22%.

### Beispiel 23

Die Mischung von 177,6 g (0,8 Mol) Isophorondiisocyanat, 33,6 g (0,2 Mol) Hexamethylendiisocyanat und 1 g 1-Methylpholinoxid wird unter Rühren ca. 30 Minuten bei 140 – 155 C gerührt. In dieser Zeit werden 14,8 l (66% der Theorie) $CO_2$ abgespalten. Der Kolbeninhalt erstarrt nach dem Abkühlen glasartig und besitzt 14,5% NCO.

### Beispiel 24

2886 g (13 Mol) Isophorondiisocyanat und 1,4 g 1-Methyl-phospholinoxid werden unter Rühren ca. 6 Stunden bei 160° C gehalten, bis 192,2 l (66% der Theorie) $CO_2$ abgespalten sind, dann wird auf 120 C gekühlt und anschließend abgefüllt. Der nach dem Abkühlen resultierende Feststoff hat einen NCO-Wert von 16% und zeigt nach der Differentialthermoanalyse zwei endotherme Effekte: bei 70 – 80° C wird der Erweichungspunkt gefunden und bei 140 – 150 C findet eine Rückbildung von Isocyanatgruppierungen statt.

Im Infrarotspektrum der festen Vernetzungskomponente werden Absorptionen beobachtet, die für Isocyanat- (2240 cm⁻¹), Uretonimin- (1725 und 1350 cm⁻¹) und Carbodiimidgruppierungen (2120 cm⁻¹) charakteristisch sind.

### Beispiel 25

### (Vergleich)

Versetzt man 174 g (1 Mol) eines Isomerengemisches von Toluylen-2,4/2,6-diisocyanat (Verhältnis 65 : 35) mit 0,09 g 1-Methylphospholinoxid, so findet bereits bei Raumtemperatur $CO_2$-Entwicklung

statt, so daß schließlich ein schaumiges, Uretonimin-freies, als Vernetzungskomponente unbrauchbares Produkt entsteht.

### Herstellung von pulverförmigen Überzugsmitteln

#### Beispiele 26 und 27

Nach üblichen Verfahren wird aus 181 Teilen Trimethylpropan, 1464 Teilen Neopentylglykol, 212 Teilen Hexan-1,6-diol, 2689 Teilen Terephthalsäure und 2 Teilen Di-n-butylzinnoxid ein Polyester mit einer Säurezahl von 4, einer Hydroxylzahl von 50, einer Viskosität entsprechend einer Auslaufzeit von 110 Sekunden (40%ig in Cyclohexanon, DIN 53 211) und einem Erweichungspunkt von 60−63°C (DTA) hergestellt.

Aus diesem Polyester und der Vernetzungskomponente aus Beispiel 24 werden unter Zufügen von Pigment und Verlaufsmittel gemäß folgender Tabelle Zusammensetzungen hergestellt, die auf einem Kollergang innig vermischt werden:

| Komponenten | Beispiel 26 (Teile) | Beispiel 27 (Teile) |
|---|---|---|
| Polyester | 50,6 | 44,6 |
| Vernetzungskomp. | 8,9 | 14,9 |
| Rutiltitandioxidpigment | 39,9 | 39,9 |
| Verlaufsmittel aus Beispiel 5 | 0,6 | 0,6 |

Diese Mischungen werden in einem Doppelwellenextruder bei 80 U/min, einer Verweilzeit von ca. 45 sec und einer Manteltemperatur von 100°C homogenisiert. Die Masseaustrittstemperatur beträgt 118 C.

Nach Abkühlen des Materials wird es in einer Stiftmühle gemahlen und anschließend gesiebt. Die Kornfraktion <90 μm wird mittels einer elektrostatischen Sprühanlage bei einer Spannung von 60 kV auf entfettete Eisenbleche aufgetragen und 15 Minuten bei 200°C eingebrannt.

Es werden folgende Ergebnisse erhalten:

| | Beispiel 26 | Beispiel 27 |
|---|---|---|
| Schichtdicke | 52−53 μm | 56−58 μm |
| Elastizität nach Erichsen | 10 mm | 10 mm |
| Gitterschnittkennwert | 0 | 0 |
| Beständigkeit gegen 50maliges Reiben mit einem Aceton getränkten Wattebausch | beständig | beständig |

#### Beispiel 28

85 Teile eines gemäß DE-OS 2 600 318 hergestellten Polyacrylatharzes, hergestellt aus 30 Teilen Styrol, 36 Teilen Methylmethacrylat, 20 Teilen Butylacrylat, 13 Teilen Hydroxypropylmethacrylat und 1 Teil Acrylsäure (Kennzahlen des Harzes: Hydroxylzahl: 50; Säurezahl: 10; Molekulargewicht $M_w$: 20 000; $M_n$: 10 000); Erweichungspunkt ca. 60°C (DTA) werden mit 15 Teilen Vernetzungskomponente gemäß Beispiel 19 und 1 Teil Verlaufsmittel analog Beispiel 15, wie in Beispiel 26 und 27 beschrieben, zu einem unpigmentierten pulverförmigen Überzugsmittel verarbeitet und auf entfettete Bleche aufgetragen, anschließend 30 Min. bei 200°C eingebrannt. Die resultierenden Klarlacke sind hart und gegen Aceton beständig.

**Patentansprüche**

1. Bindemittel für pulverförmige Überzugsmittel, bestehend aus

(a) 25 – 95 Gew.-% mindestens eines Hydroxyl-, Urethan-, Carboxyl-, Mercapto-, Amino-, Amid-, Harnstoff- oder Thioharnstoffgruppen-haltigen Monomeren, Oligomeren oder Polymeren mit einer Glasübergangstemperatur zwischen 40 und 200° C (gemessen mittels Differentialthermoanalyse) und

(b) 5 – 75 Gew.-% mindesetns eines blockierten Polyisocyanats mit einem Schmelzpunkt zwischen 40 und 220° C, wobei sich die Prozentangaben von (a) und (b) jeweils auf 100 erganzen, dadurch gekennzeichnet, daß der Vernetzer (b) mindestens eine Uretonimingruppe pro Molekül enthält.

2. Bindemittel nach Anspruch 1, dadurch gekennzeichnet, daß es zu

50 – 95 Gew.-% aus Komponente a und zu
50 – 5 Gew.-% aus Komponente b besteht.

3. Bindemittel nach Ansprüchen 1 und 2, dadurch gekennzeichnet, daß Komponente b einen Schmelzpunkt zwischen 60 und 180° C besitzt.

4. Bindemittel nach Ansprüchen 1 – 3, dadurch gekennzeichnet, daß Komponente b

0,5 – 35 Gew.-% Uretonimingruppen,
0 – 27 Gew.-% freie Isocyanatgruppen und
0 – 30 Gew.-% Carbodiimidgruppen enthält.

5. Bindemittel nach Ansprüchen 1 – 4, dadurch gekennzeichnet, daß Komponente b

0,5 – 26 Gew.- Uretonimingruppen,
0 – 27 Gew.-% freie Isocyanatgruppen und
0 – 27 Gew.-% Carbodiimidgruppen enthält.

**Claims**

1. Binder for pulverulent coating compounds consisting of

(a) 25 – 95% by weight of at least one monomer, oligomer or polymer containing hydroxyl, urethane, carboxyl, mercapto, amino, amide, urea or thiourea groups und having a glass transition temperature of between 40 and 200° C (determined by differential thermoanalysis) and

(b) 5 – 75% by weight of at least one blocked polyisocyanate having a melting point of between 40 and 220° C, the percentages of (a) and (b) always adding up to 100,

characterised in that the cross-linking agent (b) contains at least one urethane imine group per molecule.

2. Binder according to claim 1, characterised in that it consists of

50 – 95% by weight of component (a) and
50 – 5% by weight of component (b).

3. Binder according to claims 1 and 2, characterised in that component (b) has a melting point of between 60 and 180° C.

4. Binder according to claims 1 – 3, characterised in that component (b) contains

0.5 – 35% by weight of uretone imine groups,
0 – 27% by weight of free isocyanate groups and
0 – 30% by weight of carbodiimide groups.

5. Binder according to claims 1 – 4, characterised in that component (b) contains

0.5 – 26% by weight of uretone imine groups,
0 – 27% by weight of free isocyanate groups and
0 – 27% by weight of carbodiimide groups.

# 0 005 230

**Revendications**

1. Agent liant pour agents de revêtement pulvérulents, consistant en

(a) 25 à 95% en poids d'au moins un monomère, oligomère ou polymère contenant des groupes hydroxyle, uréthane, carboxyle, mercapto, amino, amide, urée ou thiourée et ayant une température de transition vitreuse entre 40 et 200°C (mesurée par analyse différentielle thermique) et

(b) 5 à 75% en poids d'au moins un polyisocyanate bloqué ayant un point de fusion entre 40 et 220°C, les indications de pourcentages de (a) et de (b) formant en tout chaque fois 100,

caractérisé en ce que le réticulant (b) contient au moins un groupe urétonimine par molécule.

2. Agent liant selon la revendication 1, caractérisé en ce qu'il consiste en

50 a 95% en poids de composant a et en
50 à 5% en poids de composant b.

3. Agent liant selon l'une quelconque des revendications 1 et 2, caractérisé en ce que le composant b possède un point de fusion entre 60 et 180°C.

4. Agent liant selon l'une quelconque des revendications 1 à 3, caractérisé en ce que le composant b contient

0,5 – 35% en poids de groupes urétonimine,
0 – 27% en poids de groupes isocyanate libres et
0 – 30% en poids de groupes carbodiimide.

5. Agent liant selon l'une quelconque des revendications 1 à 4, caractérisé en ce que le composant b contient

0,5 – 26% en poids de groupes urétonimine,
0 – 27% en poids de groupes isocyanate libres et
0 – 27% en poids de groupes carbodiimide.

17